(19) Europäisches Patentamt / European Patent Office / Office européen des brevets

(11) **EP 4 425 130 A1**

(12) **EUROPEAN PATENT APPLICATION**
published in accordance with Art. 153(4) EPC

(43) Date of publication:
**04.09.2024 Bulletin 2024/36**

(21) Application number: **21962095.2**

(22) Date of filing: **11.11.2021**

(51) International Patent Classification (IPC):
*G01J 5/48* (2022.01)    *G01J 5/08* (2022.01)
*G01J 5/20* (2006.01)

(86) International application number:
**PCT/CN2021/130028**

(87) International publication number:
**WO 2023/070749 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.10.2021 CN 202111276820**

(71) Applicant: **Yantai Raytron Technology Co., Ltd.
Yantai, Shandong 264006 (CN)**

(72) Inventors:
• **LIU, Tiande
Yantai, Shandong 264006 (CN)**

• **DONG, Shan
Yantai, Shandong 264006 (CN)**
• **GAN, Xianfeng
Yantai, Shandong 264006 (CN)**
• **WANG, Peng
Yantai, Shandong 264006 (CN)**
• **CHEN, Wenli
Yantai, Shandong 264006 (CN)**
• **WANG, Hongchen
Yantai, Shandong 264006 (CN)**

(74) Representative: **Studio Torta S.p.A.
Via Viotti, 9
10121 Torino (IT)**

(54) **UNCOOLED INFRARED POLARIZATION DETECTION PIXEL STRUCTURE, CHIP, AND DETECTOR**

(57) An uncooled infrared polarization detection pixel structure, a chip, and a detector. By setting a light-passing region of a grating layer to a regular polygon corresponding to a polarization direction, it can be ensured that gratings (111) in the light-passing region that correspond to different polarization directions have the same shape except for the different polarization directions, thereby ensuring that the grating layer has the same transmission efficiency for incident light of multiple preset polarization directions. By setting a pixel layer to a regular polygon corresponding to a light-transmissive region, and providing absorption units (8) on the surface of the pixel unit, the influence of a polarization-selective absorption characteristic caused by an electrode (71) in the pixel layer can be eliminated, so that the light absorption of infrared detection pixels is insensitive to polarization, thereby ensuring that the response of the pixel layer to light in different polarization directions is consistent, and avoiding the problem of response non-uniformity.

**Figure 3**

EP 4 425 130 A1

**Description**

The present application claims priority to Chinese Patent Application No. 202111276820.X, titled "UNCOOLED INFRARED POLARIZATION DETECTION PIXEL STRUCTURE, CHIP, AND DETECTOR", filed on October 29, 2021 with the China National Intellectual Property Administration, which is incorporated herein by reference in its entirety.

**FIELD**

The present application relates to the technical field of infrared chips, in particular to an uncooled infrared polarization detection pixel structure, an uncooled infrared polarization detection chip, and an uncooled infrared polarization detector.

**BACKGROUND**

Infrared thermal imaging technology is currently one of the rapidly developing high-tech technologies. With the infrared thermal imaging technology, differences between an infrared radiation intensity of a target and an infrared radiation intensity of a background are detected to discover, identify, and track the target. The infrared thermal imaging technology is widely used in various fields such as military, industrial, medical, and security. However, it is difficult to identify the target and background with similar temperatures with the conventional infrared thermal imaging technology, which cannot meet the requirements of effectively identifying targets in low-thermal contrast scenarios, complex backgrounds, and camouflage technologies. Compared to the conventional infrared thermal imaging technology, intensity information and polarization information of spatial targets can be simultaneously measured with the infrared polarization thermal imaging technology, effectively improving the contrast between the target and the background, highlighting the detailed features of the target, and enhancing the effectiveness of target identification. Therefore, the infrared polarization thermal imaging technology has attracted people's attention.

At present, the common infrared polarization detection technology solutions include: a Division of Time infrared polarization detection technology, a Division of amplitude infrared polarization detection technology, a Division of aperture infrared polarization detection technology, and a Division of focal plane infrared polarization detection technology. The Division of focal plane infrared polarization detection technology, due to features such as high integration and real-time imaging, has received more attention in recent years, and is considered as an important development direction for infrared polarization imaging technology in the future.

For a Division of focal plane uncooled infrared polarization detector, a layer of polarized micro-grating is generally formed above a conventional infrared focal plane array with an alignment assembly technology or an on-chip integration using MEMS (Micro Electro Mechanical System) technology, thereby realizing polarization detection.

According to the conventional technology, in order to ensure the micro-grating having a maximum aperture, the micro-grating is almost always in a square shape. Thus, for gratings with different polarization directions, such as 0°, 90°, 45° and 135°, aspect ratios and numbers of grating lines of the gratings are different. Moreover, for gratings with polarization directions 45° and 135°, short gate lines have weak polarization extinction ability for polarization light. Therefore, transmittances of different gratings for polarization light with a certain angle are different, resulting in the problem of non-uniform response.

In addition, according to the conventional technology, to ensure a thermal insulation micro-bridge pixel structure having a highest filling factor and longest bridge legs, a bridge deck is often designed to be rectangular and to be arranged at a center of a pixel, and bridge legs are added on both sides of the bridge deck. The bridge deck includes a support layer, a protection layer, a thermosensitive material, and metal electrodes on both sides of the thermosensitive material. Therefore, the pixel has strong polarization selective absorption characteristics, and absorptions of the pixel for polarization lights with polarization directions 0°, 45°, 90° and 135° are different, further exacerbating the problem of non-uniform response.

Therefore, how to provide an uncooled infrared polarization detection pixel structure in which responses of pixels in a pixel group to polarization lights with different angles are consistent is a problem to be urgently solved by those skilled in the art.

SUMMARY

According to the present disclosure, an uncooled infrared polarization detection pixel structure is provided in which responses of pixels in a pixel group to polarization lights with different angles are consistent. Further, an uncooled infrared polarization detection chip and an uncooled infrared polarization detector are provided according to the present disclosure, with which responses of pixels in a pixel group to polarization lights with different angles are consistent.

To solve the above technical problems, according to the present disclosure, there is provided an uncooled infrared polarization detection pixel structure including a semiconductor base, an infrared detection pixel, and a micro-grating, wherein

the infrared detection pixel includes a first bridge pier and a pixel layer, the pixel layer is arranged on a side of the semiconductor base by the first bridge pier, an electrode is arranged on a surface of the pixel layer facing away from the semiconductor base, and the electrode is electrically connected to the semiconductor base through a connection line and the first bridge pier;

the micro-grating includes a second bridge pier and a grating layer, the grating layer is arranged on a side of the infrared detection pixel facing away from the semiconductor base by the second bridge pier, the grating layer includes a light transmission region, a grating is arranged along a predetermined polarization direction in the light transmission region, the light transmission region is arranged in a regular polygon shape having sides of 2n times of the number of the predetermined polarization directions where n is a positive integer, and a direction of a light transmission axis of the grating is parallel to a predetermined edge of the light transmission region; and

the pixel layer is arranged in a regular polygon shape corresponding to the light transmission region, an absorption unit is arranged on the surface of the side of the pixel layer facing away from the semiconductor base, and the absorption unit causes the infrared detection pixel to be insensitive to light absorption polarization.

Alternatively, the first bridge pier overlaps with the second bridge pier.
Alternatively, the first bridge pier is electrically insulated from the second bridge pier.
Alternatively, the first bridge pier is a first supporting pillar, and/or the second bridge pier is a second supporting pillar.
Alternatively, the first supporting pillar is a metal pillar prepared by a tungsten filling process, and the second supporting pillar is a metal pillar prepared by the tungsten filling process.
Alternatively, the first bridge pier has a hollow structure, and/or the second bridge pier has a hollow structure.
Alternatively, the grating layer is arranged with a release channel running through the grating layer.
Alternatively, the release channel is arranged in a gap between adjacent grating bars of the grating.
Alternatively, an anti-reflection layer is arranged on a surface of the grating facing away from the semiconductor base.
Alternatively, the absorption unit and the electrode are arranged to be symmetrically distributed with respect to a center of the pixel layer, any of the predetermined polarization directions corresponds to the absorption unit or the electrode, and the absorption unit and the electrode absorb the same amount of light in the any of the predetermined polarization directions.
Alternatively, a material and a size of the absorption unit are same as a material and a size of the electrode.
Alternatively, the absorption unit is insensitive to the light absorption polarization, and a light absorption performance of the absorption unit is stronger than a light absorption performance of the electrode.
Alternatively, polarization selective absorption of light by the absorption unit cancels out the polarization selective absorption of light by the electrode.
Alternatively, the uncooled infrared polarization detection pixel structure includes a plurality of infrared detection pixels, four infrared detection pixels arranged in a rectangular pattern form a pixel group, and the pixel group is arranged with the micro-grating.
Alternatively, the predetermined polarization directions include a 0° polarization direction, a 45° polarization direction, a 90° polarization direction and a 135° polarization direction, the grating layer includes four light transmission regions, the pixel layer and the light transmission regions are both arranged in a regular octagonal shape, and directions of light transmission axes of gratings in the four light transmission regions respectively correspond to the four predetermined polarization directions.
Alternatively, the predetermined polarization directions include a 0° polarization direction, a 60° polarization direction and a 120° polarization direction, the grating layer includes four light transmission regions, the pixel layer and the light transmission regions are both arranged in a regular hexagonal shape, directions of light transmission axes of gratings in two of the four light transmission regions correspond to one of the predetermined polarization directions, and directions of light transmission axes of gratings in the other two of the four light transmission regions respectively correspond to the other two of the predetermined polarization directions.
Alternatively, the predetermined polarization directions include a 0° polarization direction, a 60° polarization direction and a 120° polarization direction, the grating layer includes three light transmission regions, the pixel layer and the light transmission regions are both arranged in a regular hexagonal shape, and directions of light transmission axes of gratings in the three light transmission regions respectively correspond to the three predetermined polarization directions.

Alternatively, a shading region is arranged between adjacent light transmission regions to block light from irradiating the infrared detection pixels.

According to the present disclosure, there is further provided an uncooled infrared polarization detection chip including the uncooled infrared polarization detection pixel structure described above.

According to the present disclosure, there is further provided an uncooled infrared polarization detector including the uncooled infrared polarization detection pixel structure described above.

In the uncooled infrared polarization detection pixel structure according to the present disclosure, the light transmission region of the grating layer is arranged in a regular polygon shape corresponding to the polarization direction, ensuring that the gratings corresponding to different polarization directions in the light transmission region have a same morphology except for different polarization directions, and thereby ensuring that the grating layer has a same transmissivity for incident light with a plurality of predetermined polarization directions. The pixel layer is arranged in a regular polygon shape corresponding to the light transparent region. In addition, the absorption unit is arranged on the surface of the pixel layer, removing the influence of the polarization selective absorption caused by the electrode in the pixel layer, making the infrared detection pixel to be insensitive to light absorption polarization, thereby ensuring consistent response of the pixel layer to light with different polarization directions and avoiding the problem of non-uniform response. Moreover, the grating layer is arranged above the pixel layer by the second bridge pier to separate the grating from the pixels, avoiding a significant increase in the thermal capacity of the pixel layer by the grating layer. Thus, it ensures the response speed of the pixel layer, and ensures that the grating layer has a flat surface and a complete cycle, thereby ensuring uniform light transmission in the light transmission region.

According to the present disclosure, an uncooled infrared polarization detection chip and an uncooled infrared polarization detector are further provided. The uncooled infrared polarization detection chip and the uncooled infrared polarization detector also have the above beneficial effects, which are not repeated herein.

## BRIEF DESCRIPTION OF THE DRAWINGS

In order to clearly illustrate technical solutions in the embodiments of the present disclosure or in the conventional technology, the drawings used in the description of the embodiments or the conventional technology are briefly described below. It is apparent that the drawings in the following description show only some embodiments of the present disclosure, and other drawings may be obtained by those skilled in the art based on the drawings without any creative efforts.

Figure 1 is a schematic structural diagram of an uncooled infrared detection pixel structure in the conventional technology;

Figure 2 is a schematic structural diagram of a grating layer in the conventional technology;

Figure 3 is a schematic structural diagram showing a cross-sectional view of an uncooled infrared polarization detection pixel structure according to an embodiment of the present disclosure;

Figure 4 is a schematic structural diagram showing a top view of an infrared detection pixel shown in Figure 3;

Figure 5 is a schematic structural diagram showing a top view of a micro-grating shown in Figure 3;

Figure 6 is a schematic structural diagram showing a cross-sectional view of a specific uncooled infrared polarization detection pixel structure according to an embodiment of the present disclosure;

Figure 7 is a schematic structural diagram showing a top view of a specific micro-grating according to an embodiment of the present disclosure;

Figure 8 is a schematic structural diagram showing a cross-sectional view of an uncooled infrared polarization detection pixel structure provided with the micro-grating shown in Figure 7;

Figure 9 is another schematic structural diagram showing a cross-sectional view of an uncooled infrared polarization detection pixel structure provided with the micro-grating shown in Figure 7;

Figure 10 is a schematic diagram showing a relationship between responses of pixels in a pixel group of an uncooled infrared detection pixel structure according to the conventional technology and polarization angles of an incident light; and

Figure 11 is a schematic diagram showing a relationship between responses of pixels in a pixel group of an uncooled infrared polarization detection pixel structure according to the present disclosure and polarization angles of an incident light.

Reference numerals are listed as follows:

| | | | |
|---|---|---|---|
| 1 | semiconductor base | 2 | metal reflection layer |
| 21 | metal contact | 3 | insulated media layer |
| 4 | pixel support layer | 5 | thermal sensitive layer |
| 6 | media protection layer | 7 | metal electrode layer |
| 71 | electrode | 72 | connection line |
| 8 | absorption unit | 9 | passivation protection layer |
| 10 | grating support layer | 111 | grating |
| 112 | shading region | 12 | anti-reflection layer |
| 13 | release channel | 14 | first supporting pillar |
| 15 | insulated material layer | 16 | second supporting pillar |

## DETAILED DESCRIPTION

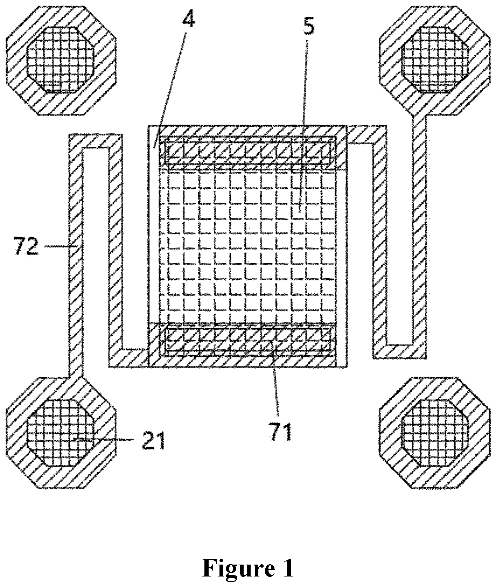

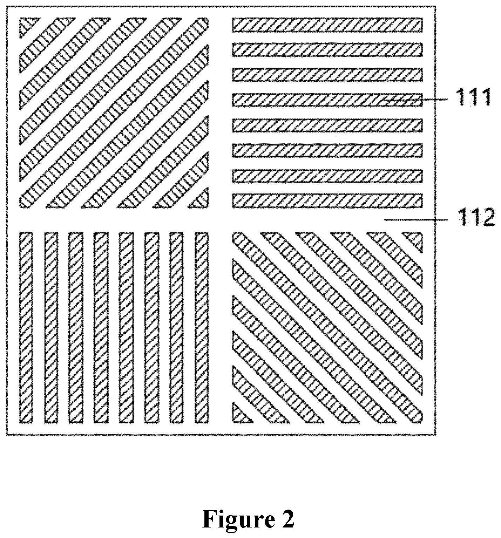

According to the present disclosure, there is provided an uncooled infrared polarization detection pixel structure. Referring to Figures 1 and 2, Figure 1 is a schematic structural diagram of an uncooled infrared detection pixel structure in the conventional technology, and Figure 2 is a schematic structural diagram of a grating layer in the conventional technology. Referring to Figures 1 and 2, in the conventional technology, in order to ensure the micro-grating having a maximum aperture, the micro-grating is almost always in a square shape. Thus, for gratings 111 with different polarization directions, such as 0°, 90°, 45° and 135°, aspect ratios and numbers of grating lines of the gratings 111 are different. Moreover, for gratings 111 with polarization directions 45° and 135°, short gate lines have weak polarization extinction ability for polarization light. Therefore, transmittances of different gratings 111 for polarization light with a certain angle are different, resulting in the problem of non-uniform response.

According to the conventional technology, to ensure a thermal insulation micro-bridge pixel structure having a highest filling factor and longest bridge legs, a bridge deck is often designed to be rectangular and to be arranged at a center of a pixel, and bridge legs are added on both sides of the bridge deck. The bridge deck includes a support layer 4, a protection layer, a thermal sensitive layer 5, and electrodes 71 on both sides of thermosensitive material. Therefore, the pixel has strong polarization selective absorption characteristics, and absorptions of the pixel for polarization lights with polarization directions 0°, 45°, 90° and 135° are different, further exacerbating the problem of non-uniform response.

In addition, according to the conventional technology, processing is usually performed based on an algorithmic for calibration and correction, that is, pixel response of polarization light with a same intensity and different polarization directions at incidence is corrected to a same level by performing a calibration and correction process. However, the correction process is cumbersome to be performed, computationally cumbersome, and requires high precision in both the polarizer and detection of the correction platform. In addition, due to the sensitivity of the uncooled infrared polarization detector to temperature, the correction effect may vary at different temperatures, and it may be required to perform the correction process in each of a plurality of temperature environments.

In the uncooled infrared polarization detection pixel structure according to the present disclosure, the light transmission region of the grating layer is arranged in a regular polygon shape corresponding to the polarization direction, ensuring that the gratings corresponding to different polarization directions in the light transmission region have a same morphology except for different polarization directions, and thereby ensuring that the grating layer has a same transmissivity for incident light with a plurality of predetermined polarization directions. The pixel layer is arranged in a regular polygon shape corresponding to the light transparent region. In addition, the absorption unit is arranged on the surface of the pixel layer, removing the influence of the polarization selective absorption caused by the electrode in the pixel layer, making the infrared detection pixel to be insensitive to light absorption polarization, thereby ensuring consistent response of the pixel layer to light with different polarization directions and avoiding the problem of non-uniform response. Moreover, the grating layer is arranged above the pixel layer by the second bridge pier to separate the grating from the pixels, avoiding a significant increase in the thermal capacity of the pixel layer by the grating layer. Thus, it ensures the response speed of the pixel layer, and ensures that the grating layer has a flat surface and a complete cycle, thereby ensuring uniform light transmission in the light transmission region.

In order to make those skilled in the art better understand the solutions in the present disclosure, the present disclosure is described in detail hereinafter with reference to drawings and embodiments. It is apparent that the embodiments described are only some rather than all the embodiments of the present disclosure. Any other embodiments acquired by those skilled in the art based on the embodiments in the present disclosure without any creative efforts fall within the protection scope of the present disclosure.

Referring to Figures 1 and 2, due to the grating 111 arranged in a rectangular shape and the pixel structure arranged in a rectangular shape in the conventional technology, the inherent non-uniformity is generally greater than 10%, which is much more severe than the random non-uniformity problem caused by processes. According to the conventional polarization detection method, polarization information of a target is indicated by using Stokes parameters. In calculating the Stokes parameters, responses of four pixel, that is, $I_{0°}$, $I_{45°}$, $I_{90°}$ and $I_{135°}$, are required. Therefore, in the case that the responses of four pixel have strong non-uniformity, significant errors may be generated in directly calculating the Stokes parameters, generating pseudo polarization information and seriously affecting the accuracy of polarization detection.

Specifically, for a Division of focal plane uncooled infrared polarization detector, a layer of polarized micro-grating is generally formed above a conventional infrared focal plane array with an alignment assembly technology or an on-chip integration using MEMS technology. The angles of adjacent gratings 111 on the grating layer are generally set to 0°, 45°, 90° and 135°. The gratings with four angles are arranged in a 2 × 2 arrangement. The gratings with four angles and four thermal insulated micro-bridge structures directly below the gratings form an infrared polarization detection unit, which is called as a "superpixel". For each of pixels, a grating 111 in front of the pixel performs a polarization selective modulation on an incident light, and the change in light intensity of the incident light satisfies the following Malus' law:

$$I = I_0 cos^2\theta$$

where $I_0$ represents the light intensity of the incident light, and $\theta$ represents an angle between a polarization direction of the incident light and a direction of a transmission axis of the grating 111. For a beam of light passing through gratings 111, modulations for the incident light by the gratings 111 at different angles are different based on polarization information of the incident light. Therefore, response signals of pixels below different gratings 111 are different, and are respectively represented by $I_{0°}$, $I_{45°}$, $I_{90°}$ and $I_{135°}$. The Stokes parameters $S_0$, $S_1$, and $S_2$ may be calculated based on the response signals of the four pixels:

$$S_0 = \frac{1}{2} \times \left(I_{0°} + I_{45°} + I_{90°} + I_{135°}\right)$$

$$S_1 = \left(I_{0°} - I_{90°}\right)$$

$$S_2 = \left(I_{45°} - I_{135°}\right)$$

Further, the degree of linear polarization (DoLP) and the angle of polarization (AoP) of the incident light may be calculated by using the following equations:

$$DoLP = \frac{\sqrt{S_1^2 + S_2^2}}{S_0}$$

$$AoP = \frac{1}{2} arctan \left(\frac{S_2}{S_1}\right)$$

Thus, the polarization detection is performed. However, as mentioned above, the structure of the grating 111 and the micro-bridge structure may cause serious problem of non-uniform response, that is, responses $I_{0°}$, $I_{45°}$, $I_{90°}$ and $I_{135°}$ of the pixels differ significantly for polarized light with a same intensity and different polarization angles. The degree of linear polarization (DoLP) and the angle of polarization (AoP) calculated based on the above equations for characterizing the polarization light have significant deviations. In a case of not solving the problem of non-uniform response, false polarization information is to be generated in an imaging process, seriously affecting the accuracy of detected target polarization information.

Specifically, in the imaging process of the shared focal plane, the main influencing factors for responses Ii of pixels include: transmittances $t_i$ of light transmission axes of gratings of pixels, effective absorptivity $\alpha_i$ of the pixels with considering a filling factor, and thermal conductivities $G_i$ of the pixels, that is:

$$I_i \propto \frac{t_i \alpha_i}{G_i} (i = 0°, 45°, 90°, 135°)$$

It is assumed that in an ideal condition of ignoring process errors, the transmittances of the light transmission axes of the gratings 111 of the pixels are identical, the effective absorptivity of the pixels are identical, and the thermal conductivities of the pixels are identical, that is, ti=t, $\alpha_i=\alpha$, and $G_i=G$. For an uncooled infrared polarization detector, there are following eight cases for the pixel structure.

In case (1), the transmittances of the light transmission axes of the gratings 111 of the pixels are identical, the effective absorptivity of the pixels are identical, and the thermal conductivities of the pixels are identical: $\frac{t\alpha}{G}$.

In case (2), the transmittances of the light transmission axes of the gratings 111 of the pixels are different, the effective absorptivity of the pixels are identical, and the thermal conductivities of the pixels are identical: $\frac{t_i\alpha}{G}$.

In case (3), the effective absorptivity of the pixels are different, the transmittances of the light transmission axes of the gratings 111 of the pixels are identical, and the thermal conductivities of the pixels are identical: $\frac{t\alpha_i}{G}$.

In case (4), the transmittances of the light transmission axes of the gratings 111 of the pixels are identical, the effective absorptivity of the pixels are identical, and the thermal conductivities of the pixels are different: $\frac{t\alpha}{G_i}$.

In case (5), the transmittances of the light transmission axes of the gratings 111 of the pixels are different, the effective absorptivity of the pixels are different, and the thermal conductivities of the pixels are identical: $\frac{t_i\alpha_i}{G}$.

In case (6), the transmittances of the light transmission axes of the gratings 111 of the pixels are different, the thermal conductivities of the pixels are different, and the effective absorptivity of the pixels are identical: $\frac{t_i\alpha}{G_i}$.

In case (7), the transmittances of the light transmission axes of the gratings 111 of the pixels are identical, the effective absorptivity of the pixels are different, and the thermal conductivities of the pixels are different: $\frac{t\alpha_i}{G_i}$.

In case (8), the transmittances of the light transmission axes of the gratings 111 of the pixels are different, the effective absorptivity of the pixels are different, and the thermal conductivities of the pixels are different: $\frac{t_i\alpha_i}{G_i}$.

In the above eight cases, case (1) is a most ideal case in which the responses of the pixels are identical, that is, $I_{0°}=I_{45°}=I_{90°}=I_{135°}$, and no inherent non-uniform problem exists. In cases (2), (3) and (4), the responses of the pixels are different, and the inherent non-uniform problem exists. In cases (5) to (8), $t_i$, $\alpha_i$ and $G_i$ of the pixels may be flexibly adjusted, and $\frac{t\alpha}{G}$ is obtained, eliminating the inherent non-uniform problem. However, in cases (6) to (8), the thermal conductivities of the pixels are inconsistent, thus the thermal response time may be inconsistent, which is not conducive to the imaging process. Therefore, cases (6) to (8) are not suitable.

In summary, only in cases (1) and (5), the inherent non-uniform problem may be solved by improving the structure. In case (5), it is required to adjust $t_i$ and $\alpha_i$ of the pixels to meet

$$\frac{t_{0°}\alpha_{0°}}{G} = \frac{t_{45°}\alpha_{45°}}{G} = \frac{t_{90°}\alpha_{90°}}{G} = \frac{t_{135°}\alpha_{135°}}{G} = \frac{t\alpha}{G}$$

, which requires high computational and process accuracy.

Therefore, only in case (1), the method of improving the structure to control the transmittances of the light transmission axes of the gratings of the pixels to be identical, to control the effective absorptivity of the pixels to be identical and to control the thermal conductivities of the pixels to be identical is the most ideal method for eliminating the inherent non-uniform problem.

In the uncooled infrared polarization detection pixel structure according to the following embodiments of the present disclosure, the structure is improved, so that the transmittances of the light transmission axes of the gratings 111 of the pixels are identical, the effective absorptivity of the pixels are identical, and the thermal conductivities of the pixels are identical.

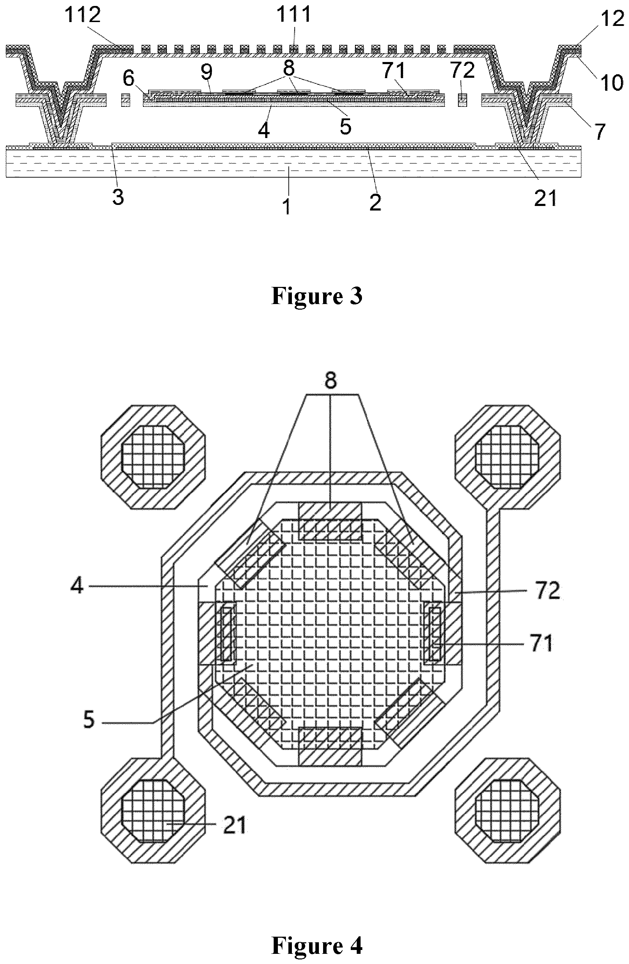

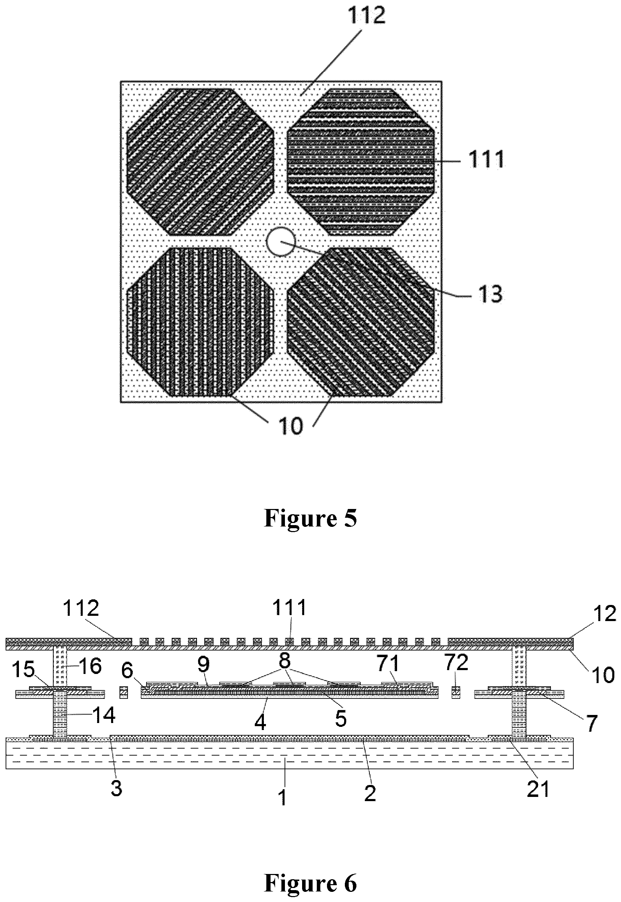

Referring to Figures 3 to 5, Figure 3 is a schematic structural diagram showing a cross-sectional view of an uncooled infrared polarization detection pixel structure according to an embodiment of the present disclosure, Figure 4 is a schematic structural diagram showing a top view of an infrared detection pixel shown in Figure 3, and Figure 5 is a schematic structural diagram showing a top view of a micro-grating shown in Figure 3.

Referring to Figures 3 to 5, in an embodiment of the present disclosure, an uncooled infrared polarization detection pixel structure includes a semiconductor base 1, an infrared detection pixel, and a micro-grating. The infrared detection pixel includes a first bridge pier and a pixel layer. The pixel layer is arranged on a side of the semiconductor base 1 by the first bridge pier. An electrode 71 is arranged on a surface of the pixel layer facing away from the semiconductor base 1. The electrode 71 is electrically connected to the semiconductor base 1 through a connection line 72 and the first bridge pier. The micro-grating includes a second bridge pier and a grating layer. The grating layer is arranged on a side of the infrared detection pixel facing away from the semiconductor base 1 by the second bridge pier. The grating layer includes a light transmission region. A grating 111 is arranged along a predetermined polarization direction in the light transmission region. The light transmission region is arranged in a regular polygon shape having sides of 2n times of the number of the predetermined polarization directions where n is a positive integer. A direction of a light transmission axis of the grating 111 is parallel to a predetermined edge of the light transmission region. The pixel layer is arranged in a regular polygon shape corresponding to the light transmission region. An absorption unit 8 is arranged on the surface of the side of the pixel layer facing away from the semiconductor base 1. The absorption unit 8 causes the infrared detection pixel to be insensitive to light absorption polarization.

The semiconductor base 1 is used to read a signal generated by the infrared detection pixel. The semiconductor base 1 usually includes a metal reflection layer 2 and an insulated media layer 3. The metal reflection layer 2 includes multiple metal contacts 21. The insulated media layer 3 is usually arranged on a surface of the metal reflection layer 2 facing the infrared detection pixel. The infrared detection pixel includes a first bridge pier and a pixel layer. The pixel layer is a main structure responding to external light. The pixel layer is provided with a thermal sensitive layer 5. The thermal sensitive layer 5 may respond to the external light. An electrode 71 is arranged on a side of the thermal sensitive layer 5 facing away from the semiconductor base 1. The electrode 71 is a contact electrically connected to the thermal sensitive layer 5. The first bridge pier is used for arranging the pixel layer above the semiconductor base 1. The electrode 71 in contacted with the thermal sensitive layer 5 is usually electrically connected to the semiconductor base 1 through a connection line 72 and the first bridge pier. Generally, the connection line 72 passes through the first bridge pier to contact with the metal contact 21 in the semiconductor base 1. Generally, in an uncooled infrared polarization detection chip provided with a plurality of the uncooled infrared polarization detection pixel structures according to the embodiments of the present disclosure, the semiconductor base 1 may form a readout circuit through which signals generated by the plurality of pixel structures in the uncooled infrared polarization detection chip are read.

Generally, the pixel layer includes a pixel support layer 4. The pixel support layer 4 extends to the semiconductor base 1 at the first bridge pier. A first through-hole, running through the pixel support layer 4 and the insulated media layer 3, is defined on the surface of the semiconductor base 1. The first through-hole extends to a surface of the metal contact 21 in the semiconductor base 1, so that the connection line 72 may be electrically connected to the metal contact 21 in the semiconductor base 1. The thermal sensitive layer 5 is arranged on a surface of the pixel support layer 4 facing away from the semiconductor base 1. A media protection layer 6 is arranged on a surface of the thermal sensitive layer 5 facing away from the semiconductor base 1. A metal electrode layer 7 is arranged on a surface of the media protection layer 6 facing away from the semiconductor base 1. The metal electrode layer 7 includes the electrode 71 and the connection line 72. A second through-hole is defined in the media protection layer 6, and the second through-hole runs through the media protection layer 6 and extends to the thermal sensitive layer 5. The electrode 71 is arranged in the second through-hole and contacts with the thermal sensitive layer 5. The metal electrode layer 7 may extend to the first through-hole through the first bridge pier, so that the connection line 72 may be electrically connected to the metal contact 21 in the semiconductor base 1. A passivation protection layer 9 is usually arranged on a surface of the metal electrode layer 7 facing away from the semiconductor base 1 to protect the above structures.

The micro-grating includes a second bridge pier and a grating layer. The grating layer is arranged above the infrared detection pixel by using the second bridge pier, so that the grating layer is separated from the pixel layer, avoiding the grating layer greatly affecting the heat capacity of the pixel layer and affecting the response speed of the pixel layer, and avoiding the impact of the roughness surface structure in the pixel layer on the periodic structure of the grating 111 in the grating layer. Specifically, the grating layer is arranged on a side of the infrared detection pixel facing away from the semiconductor base 1 by the second bridge pier. The grating layer is provided with a light transmission region. A grating 111 is arranged along a predetermined polarization direction in the light transmission region. The grating 111 may project light vibrating along the predetermined polarization direction to the pixel layer. It is usually required to arrange the grating 111 along the predetermined polarization direction, and the entire light transmission region is filled. In an embodiment of the present disclosure, the grating 111 is usually a metal grating 111.

Generally, the grating layer includes a grating support layer 10 and a grating 111. The grating 111 is arranged on a surface of the grating support layer 10 facing away from the semiconductor base 1. The grating support layer 10 usually extends to the pixel layer at the second bridge pier, providing good support. The grating 111 is arranged in the predetermined light transmission region in the grating layer. Specifically, in an embodiment of the present disclosure, the light transmission region is arranged in a regular polygon shape, and the number of edges of the regular polygon corresponds to the number of the predetermined polarization directions. Specifically, the number of the edges of the regular polygon is 2n times of the number of the predetermined polarization directions, where n is a positive integer. For example, in a case that the predetermined polarization directions includes four predetermined polarization directions of a 0° polarization direction, a 45° polarization direction, a 90° polarization direction and a 135° polarization direction, it is required to arrange the light transmission region to be in a regular octagonal shape. In a case that the predetermined polarization directions includes three predetermined polarization directions of a 0° polarization direction, a 60° polarization direction and a 120° polarization direction, it is required to arrange the light transmission region to be in a regular hexagonal shape. In the embodiments of the present disclosure, it is required to determine the shape of the light transmission region based on the number of predetermined polarization directions. The gratings 111 in the light transmission regions corresponding to different predetermined polarization directions may have different angles and a same morphology. That is, a grating 111 corresponding to a predetermined polarization direction may be obtained by only rotating a grating 111 in another light transmission region. Apparently, the regular polygon maybe a regular hexadecagon and the like in a case of four predetermined polarization directions, and the regular polygon may be a regular dodecagon and the like in a case of three predetermined polarization directions, as long as the number of the edges of the regular polygon is 2n times of the number of the predetermined polarization directions, where n is a positive integer. To avoid too short grating lines, the number of the edges of the regular polygon is usually only twice of the number of the predetermined polarization directions.

Correspondingly, in the embodiments of the present disclosure, it is required to arrange the pixel layer to be in a regular polygon shape corresponding to the shape of the light transmission region above the pixel layer, and usually the shape of the pixel layer is consistent with the shape of the light transmission region above the pixel layer. That is, in the case that the light transmission region is in a regular octagon shape, it is required to arrange the pixel layer below the light transmission region to be in a regular octagon shape. In the case that the light transmission region is in a regular hexagon shape, it is required to arrange the pixel layer below the light transmission region to be in a regular hexagon shape. Based on the regular polygon structure of the pixel layer, the electrode 71 is usually arranged at an edge of the pixel layer. Usually, electrodes 71 are arranged at the two opposite edges of the pixel layer.

In an embodiment of the present disclosure, due to strong absorption of incident light by the electrodes 71 and the polarization selective absorption characteristics of the electrodes 71, the electrodes 71 strongly absorb polarization light with a polarization direction perpendicular to two electrodes 71, and weakly absorb polarization light with a polarization direction parallel to the two electrodes 71. Therefore, it is required to perform absorption balance by using the absorption unit 8. Specifically, in an embodiment of the present disclosure, an absorption unit 8 is arranged on the surface of the pixel layer facing away from the semiconductor base 1 for making the infrared detection pixel insensitive to light absorption polarization. Thus, the infrared detection pixel have roughly equal absorption efficiency for polarization light in any predetermined polarization direction without excessive reflection or absorption of polarization light at a certain angle, so that the pixel layer has roughly a same response effect on light in different polarization directions. The structure of the absorption unit 8 is described in detail in the following embodiments of the present disclosure, and is not further elaborated herein.

Specifically, in an embodiment of the present disclosure, the material of the metal reflection layer 2 in the semiconductor base 1 may be aluminum or another metal material. The thickness of the metal reflection layer 2 may range from 50 nm to 1000 nm (including 50 nm and 1000 nm). The material of the insulated media layer 3 in the semiconductor base 1 may be one of silicon nitride, silicon oxide and silicon oxynitride, depending on specific situations. The material of the pixel support layer 4 in the pixel layer may be one of silicon nitride, silicon oxide and silicon oxynitride. The material of the thermal sensitive layer 5 may be one of vanadium oxide, titanium oxide, amorphous silicon, manganese oxide, and zinc oxide. The material of the media protection layer 6 on the surface of the thermal sensitive layer 5 facing away from the semiconductor base 1 may be one of silicon nitride, silicon oxide, and silicon oxynitride. The material of the metal electrode layer 7, including the connection line 72 and the electrodes 71, may be one of titanium, aluminum, copper, gold, vanadium, titanium nitride, nickel chromium alloy, and titanium aluminum alloy. The material of the passivation protection layer 9 on the surface of the metal electrode layer 7 facing away from the semiconductor base 1 may be one of silicon nitride, silicon oxide, and silicon oxynitride.

Specifically, in an embodiment of the present disclosure, the material of the grating support layer 10 may be one or any combination of silicon nitride, silicon oxide, silicon oxynitride, and amorphous silicon. The material of the grating 111 may be one of gold, silver, copper, aluminum, tungsten, cadmium, chromium, and titanium. The thickness of the grating 111 usually ranges from 20 nm to 1000 nm (including 20 nm and 1000 nm). The grating period of the grating 111 usually ranges from 50 nm to 1000 nm (including 50 nm and 1000 nm). The duty cycle of the grating 111 usually ranges from 20% to 80% (including 20% and 80%).

In an embodiment of the present disclosure, it is required for the structures of the gratings 111 in the light transmission regions to be identical, with only differences in the arrangement direction of the grating lines. In each predetermined polarization direction, the apertures of the light transmission regions are identical, the aspect ratios of the grating lines are identical, and the numbers of the grating lines are identical. Therefore, the transmittances of the transmission axes of the gratings 111 are identical in each predetermined polarization direction. It should be noted that in the embodiment of the present disclosure, it is required for the direction of the light transmission axis of the grating 111 to be parallel to the predetermined edge of the light transmission region, thereby ensuring that the lengths of the grating lines of the grating 111 in a light transmission region are generally identical.

It should be noted that in the embodiment of the present disclosure, since the two-layer suspended structure of the infrared detection pixel and the micro-grating are prepared based on a sacrificial layer, it is required to leave a release channel to remove the sacrificial layer after preparing the device. Specifically, in an embodiment of the present disclosure, the grating layer may be provided with a release channel 13 that runs through the grating layer. In a preferred embodiment of the present disclosure, the first bridge pier overlaps with the second bridge pier. That is, the second bridge pier is arranged at the first bridge pier, and the first bridge pier overlaps with the second bridge pier in a vertical direction, thereby connecting the grating layer to the pixel layer. Specifically, in a case that both the first bridge pier and the second bridge pier have the conventional pier structure, the grating support layer 10 may extend to a surface of the passivation protection layer 9 at the second bridge pier, and the grating support layer 10 is connected to the passivation protection layer 9 at an extension plane on a surface of the first bridge pier. It should be noted that in an embodiment of the present disclosure, in a case that both the first bridge pier and the second bridge pier have the conventional pier structure which is a hollow structure, it is required for the grating support layer to extend to the first bridge pier, so that the first bridge pier and the second bridge pier overlap with each other.

In a preferred embodiment of the present disclosure, the first bridge pier is electrically insulated from the second bridge pier, avoiding the impact of the micro-grating on the electrical signals transmitted in the connection line 72 in the first bridge pier. Specifically, materials with good electrical insulation performance may be selected for the passivation protection layer 9 and the pixel support layer 4, or an electrical insulation material may be added between the first bridge pier and the second bridge pier, which depends on the specific situations and is not limited herein.

In the uncooled infrared polarization detection pixel structure according to the embodiment of the present disclosure, the light transmission region of the grating layer is arranged in a regular polygon shape corresponding to the polarization direction, ensuring that the gratings 111 corresponding to different polarization directions in the light transmission region have a same morphology except for different polarization directions, and thereby ensuring that the grating layer has a same transmissivity for incident light with a plurality of predetermined polarization directions. The pixel layer is arranged in a regular polygon shape corresponding to the light transmission region. In addition, the absorption unit 8 is arranged on the surface of the pixel layer, removing the influence of the polarization selective absorption caused by the electrode 71 in the pixel layer, making the infrared detection pixel to be insensitive to light absorption polarization, thereby ensuring consistent response of the pixel layer to light with different polarization directions and avoiding the problem of non-uniform response. Moreover, the grating layer is arranged above the pixel layer by the second bridge pier to separate the grating 111 from the pixels, avoiding a significant increase in the thermal capacity of the pixel layer by the grating layer. Thus, it ensures the response speed of the pixel layer, and ensures that the grating layer has a flat surface and a complete cycle, thereby ensuring uniform light transmission in the light transmission region.

The uncooled infrared polarization detection pixel structure according to the present disclosure is described in detail in the following embodiments of the present disclosure.

Different from the above embodiments, the structure of the absorption unit 8 in the uncooled infrared polarization detection pixel structure according to the above embodiments is further described in the following embodiments of the present disclosure, and the other contents have been described in detail in the above embodiments and are not repeated herein.

In an embodiment of the present disclosure, the following three structures of the absorption unit 8 are provided, based on all of which the infrared detection pixel is insensitive to light absorption polarization. The material of the absorption unit 8 may be one of titanium, aluminum, copper, gold, vanadium, titanium nitride, nickel chromium alloy, titanium aluminum alloy, gold black, and graphene.

For a first structure of the absorption unit 8, as shown in Figure 4, the absorption unit 8 and the electrode 71 are symmetrically distributed with respect to a center of the pixel layer, any of the predetermined polarization directions corresponds to the absorption unit 8 or the electrode 71, and the absorption unit 8 and the electrode 71 absorb the same amount of light in the predetermined polarization direction.

In the first structure, an absorption unit 8 similar to the electrode 71 may be arranged on the pixel layer, and the absorption unit 8 is usually a metal block. In an embodiment of the present disclosure, the absorption unit 8 is used for balancing the absorption of polarized light in various polarization directions by the metal structure on the surface of the pixel layer. Generally, in an embodiment of the present disclosure, the material and size of the absorption unit 8 are same as the material and size of the electrode 71. That is, the absorption unit 8 and electrode 71, except for corresponding to different polarization directions, have the same absorption effect on the light in corresponding polarization directions. Specifically, in an embodiment of the present disclosure, the absorption unit 8 and the electrode 71 are symmetrically distributed with respect to a center of the pixel layer, any of the predetermined polarization directions corresponds to the absorption unit 8 or the electrode 71, and the absorption unit 8 and the electrode 71 absorb the same amount of light in all the predetermined polarization directions. The electrode 71 and the absorption unit 8 are distributed in a circular pattern on the surface of the pixel layer, and the electrode 71 and the absorption unit 8 are symmetrically distributed with respect to the center of the pixel layer.

Taking a pixel layer in a regular octagon shape as an example, in a case that the electrodes 71 are arranged on two opposite edges (a left edge and a right edge) of the pixel layer, the electrodes 71 strongly absorbs polarization light with the polarization direction perpendicular to the two electrodes 71 and weakly absorbs polarization light with the polarization direction parallel to the two electrodes 71. The 90° polarization direction is perpendicular to the two electrodes 71, and the 0° polarization direction is parallel to the two electrodes 71, so that the electrodes 71 may cause the pixel layer to strongly absorb the polarization light in the 90° polarization direction and weakly absorb the polarization light in the 0° polarization direction. Thus, the response of the pixel layer to the polarization light in the 90° polarization direction is significantly stronger than the response of the pixel layer to the polarization light in the 0° polarization direction, exhibiting an obvious polarization dependent response characteristic. In contrast with this, the absorption unit 8 and the electrodes 71 are symmetrically distributed with respect to the center of the pixel layer, each predetermined polarization direction corresponds to the absorption unit 8 or the electrodes 71, and the absorption unit 8 and the electrodes 71 absorb the same amount of light in the predetermined polarization direction. That is, due to the highly symmetrical distribution of the absorption unit 8 and the electrodes 71, for any polarization light, a metal block, with a same relative position and a same relative angle as the polarization light, absorbs the polarization light. Therefore, in all the predetermined polarization directions, the electrodes 71 or the absorption unit 8 performs absorption with different strengths. Thus, the pixel layer performs a same response to light in different polarization directions, achieving a polarization insensitive response characteristic.

In the first structure, absorption balance is achieved only based on the relative position distribution relationship of the metal blocks, and a polarization insensitive pixel structure is obtained without tedious calculations, simulations, and complex designs. Therefore, the first structure may be considered as a simplest and most effective design solution. Specifically, in the first structure, the metal block forming the absorption unit 8 may be arranged on a side of the passivation protection layer 9 facing the semiconductor base 1. It is required to arrange the absorption unit 8 to be roughly in a same plane where the electrodes 71 are located, thereby ensuring that the absorption unit 8 may absorb the same amount of light in the predetermined polarization direction as the electrodes 71. The absorption unit 8 is separated from the connection line 72 to avoid affecting the transmission of electrical signals.

For a second structure of the absorption unit 8, the absorption unit 8 is insensitive to the light absorption polarization, and the light absorption performance of the absorption unit 8 is stronger than the light absorption performance of the electrode 71. In the second structure, it is usually required for the absorption unit 8 arranged on the surface of the pixel layer to have a good absorption performance for the light in various predetermined polarization directions, and the absorption performance should to be much stronger than the absorption performance of the electrode 71 for the light, thereby greatly weakening the impact on the pixel layer in receiving light due to the electrode 71 absorbing the light, and ensuring the polarization insensitive response characteristics of the pixel layer. The material of the absorption unit 8 is usually blackbody material. Specifically, the material of the absorption unit 8 may be graphene, gold black and the like, which has strong absorption performance for light in various polarization directions. The specific arrangement of the absorption unit 8 on the surface of the pixel layer may be determined according to specific situations, and is not limited herein.

For a third structure of the absorption unit 8, the polarization selective absorption of light by the absorption unit 8 cancels out the polarization selective absorption of light by the electrode 71. That is, in the embodiments of the present disclosure, the polarization selective absorption performance of the absorption unit 8 for the light may cancel out the polarization selective absorption performance of the electrode for the light, so that the pixel layer exhibits polarization insensitive response characteristics, and the absorption of the infrared detection pixel no longer has polarization selective characteristics. Due to that the polarization selective absorption performance of the absorption unit 8 for light may cancel out the polarization selective absorption performance of the electrode 71 for light, the material of the absorption unit 8 is determined based on the material of the electrode 71, and the size of the absorption unit 8 may be optimized, for achieving the above effect. It should be noted that the difference between the second structure and the first structure is that, in the first structure, the absorption of the pixel layer for the polarization light in various predetermined directions is adjusted to a same level based on a central symmetric structure, and in the second structure, the polarization selective absorption performance of the electrode 71 for light is cancelled out by the absorption unit 8. For example, in a case that the electrode 71 strongly absorbs 0° incident light and weakly absorbs 90° incident light, a polarization selective absorption structure is designed on the pixel to weakly absorbs the 0° incident light and strongly absorbs the 90° incident light, thereby performing cancellation.

In the uncooled infrared polarization detection pixel structure according to the embodiment of the present disclosure, three different structures of the absorption unit 8 are provided, based on all of which the infrared detection pixel is insensitive to light absorption polarization.

The structure of the uncooled infrared polarization detection pixel structure according to the present disclosure is to be described in detail in the following embodiments of the present disclosure.

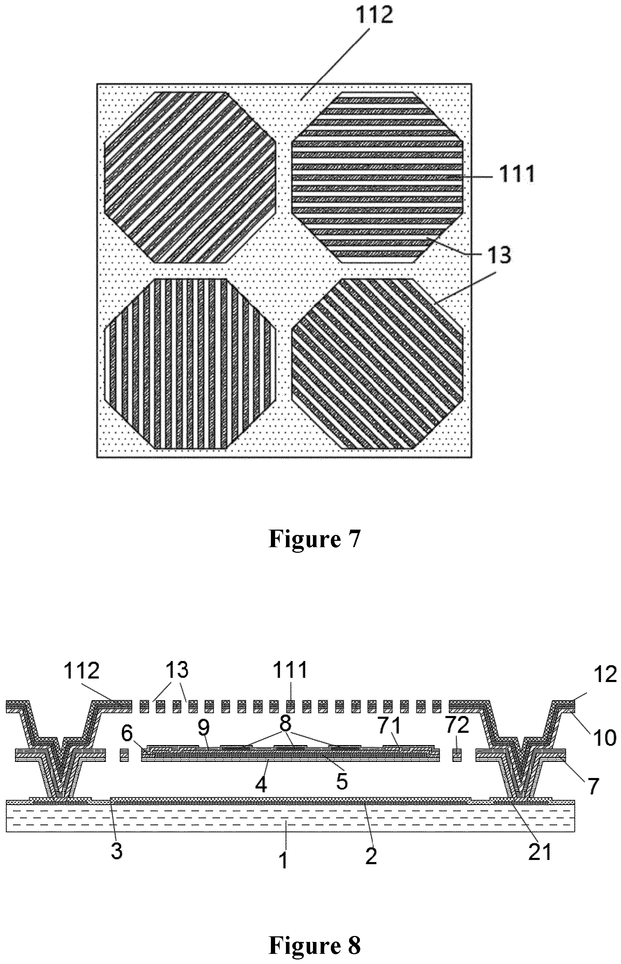

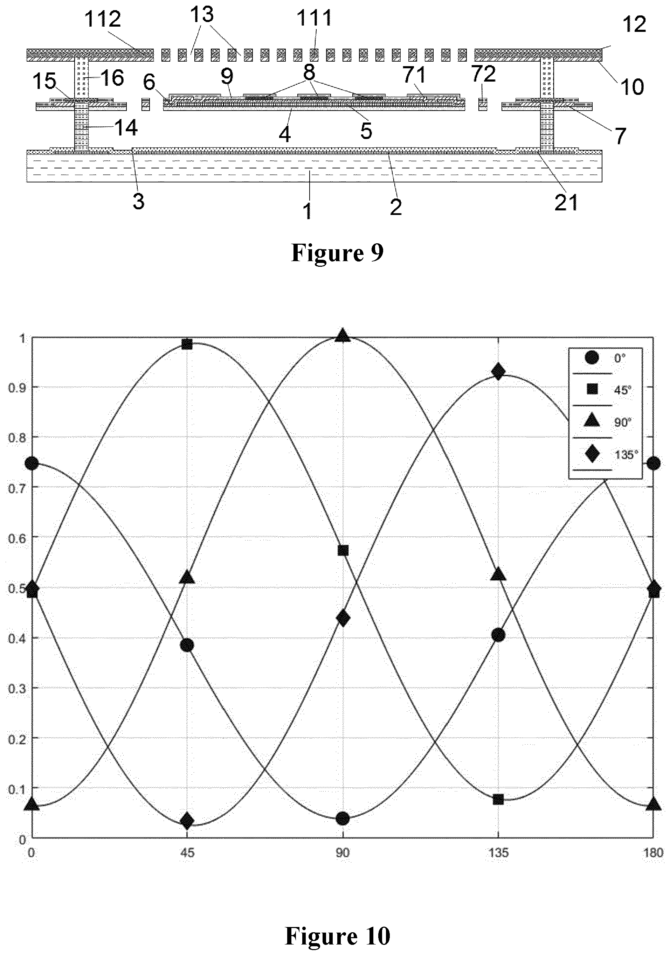

Referring to Figures 6 to 9, Figure 6 is a schematic structural diagram showing a cross-sectional view of a specific uncooled infrared polarization detection pixel structure according to an embodiment of the present disclosure, Figure 7 is a schematic structural diagram showing a top view of a specific micro-grating according to an embodiment of the present disclosure, Figure 8 is a schematic structural diagram showing a cross-sectional view of an uncooled infrared polarization detection pixel structure provided with the micro-grating shown in Figure 7, and Figure 9 is another schematic structural diagram showing a cross-sectional view of an uncooled infrared polarization detection pixel structure provided with the micro-grating shown in Figure 7.

Different from the above embodiments of the present disclosure, in an embodiment of the present disclosure, the structure of the uncooled infrared polarization detection pixel structure is further defined based on the above embodiments. The rest of the contents has been described in detail in the above embodiments of the present disclosure and is not repeated herein.

Referring to Figure 6, in an embodiment of the present disclosure, the first bridge pier is a first supporting pillar 14, and/or the second bridge pier is a second supporting pillar 16. That is, in the embodiment of the present disclosure, the first bridge pier and the second bridge pier may not be the conventional bridge pier structure having an inverted trapezoidal vertical cross-section, and may be the first supporting pillar 14 and the second supporting pillar 16 having a columnar structure. Apparently, in a case of arranging the pixel layer by the first supporting pillar 14 and arranging the grating layer by the second supporting pillar 16, it may effectively reduce the occupation of the surface space of the pixel layer, so that the pixel layer have a large usage space, thereby effectively increasing the area of the pixel layer for receiving light or facilitating the arrangement of the structures in the grating layer. It should be noted that in the embodiment of the present disclosure, it may be only arranging the first bridge pier as the first supporting pillar 14, or only arranging the second bridge pier as the second supporting pillar 16, or arranging the first bridge pier as the first supporting pillar 14 and arranging the second bridge pier as the second supporting pillar 16, which is determined according to the specific situations and is not limited herein. In a case that the first supporting pillar 14 is arranged, it is not required for the pixel support layer 4 in the pixel layer does to extend to the semiconductor base 1 at the first supporting pillar 14. In this case, the bottom of the first supporting pillar 14 is usually contacted with the metal contact 21 in the semiconductor base 1, the top of the first supporting pillar 14 is contacted with the connection line 72, and the material of the first supporting pillar 14 is usually conductive material, so that the connection line 72 may be electrically connected to the semiconductor base 1 through the first supporting pillar 14. Similarly, in a case that the second supporting pillar 16 is arranged, it is not required for the grating support layer 10 in the grating layer to extend to the pixel layer at the second supporting pillar 16. In this case, the bottom of the second supporting pillar 16 is usually contacted with the passivation protection layer 9 in the pixel layer, and the top of the second supporting pillar 16 is usually contacted with the grating support layer 10 of the grating layer.

Generally, the first supporting pillar 14 and the second supporting pillar 16 have a solid columnar structure, and the first supporting pillar 14 has a roughly unchanged dimension along an axis direction. Correspondingly, the second supporting pillar 16 has a roughly unchanged dimension along an axis direction. Specifically, in the embodiment of the present disclosure, the first supporting pillar 14 is a metal column prepared by a tungsten filling process, and the second supporting pillar 16 is a metal column prepared by the tungsten filling process. That is, the first supporting pillar 14 may be a metal column prepared by the tungsten filling process, and the material of the first supporting pillar 14 may be tungsten, copper, aluminum, gold, titanium, titanium nitride, and the like. The diameter of the first supporting pillar 14 usually ranges from 0.1 $\mu$m to 1.2 $\mu$m (including 0.1 $\mu$m and 1.2 $\mu$m). The height of the first supporting pillar 14 usually ranges from 0.5 $\mu$m to 2.5 $\mu$m (including 0.5 $\mu$m and 2.5 $\mu$m). Correspondingly, the second supporting pillar 16 may be a metal column prepared by the tungsten filling process, and the material of the second supporting pillar 16 may be tungsten, copper, aluminum, gold, titanium, titanium nitride, and the like. The diameter of the second supporting pillar 16 usually ranges from 0.1 $\mu$m to 1.2 $\mu$m (including 0.1 $\mu$m and 1.2 $\mu$m). The height of the second supporting pillar 16 usually ranges from 0.5 $\mu$m to 2.5 $\mu$m (including 0.5 $\mu$m and 2.5 $\mu$m). Generally, an insulated material layer 15 may be arranged between the first supporting pillar 14 and the second supporting pillar 16 to ensure that the first supporting pillar 14 is electrically insulated from the second supporting pillar 16. By arranging the supporting pillars as the bridge piers, the area of the bridge piers is significantly reduced, effectively improving the filling factor of the pixel layer and the grating layer. In addition, the flatness of the grating layer is improved, ensuring the integrity of the periodic polarization structure of the grating 111.

Apparently, in an embodiment of the present disclosure, the first bridge pier may have a hollow structure, and/or the second bridge pier may also have a hollow structure. That is, the first bridge pier and the second bridge pier may have a conventional hollow bridge pier structure, so that the conventional pixel preparation process may be compatible with the uncooled infrared polarization detection pixel structure according to the embodiment of the present disclosure.

Referring to Figure 5, specifically, in an embodiment of the present disclosure, the grating layer is provided with a release channel 13 running through the grating layer for releasing the sacrificial layer. Generally, the release channel 13 is arranged at the center of the grating layer. The diameter of the release channel 13 usually ranges from 0.5 $\mu$m to 3 $\mu$m (including 0.5 $\mu$m and 3 $\mu$m). Apparently, the release channel may be arranged at another position of the grating layer, such as a position near a light transmission region, which is not limited herein. Referring to Figures 7, 8 and 9, in an embodiment of the present disclosure, the grating 111 arranged in the light transmission region is usually a metal grating 111, and grating bars forming the grating 111 are usually metal bars. In a preferred embodiment of the present disclosure, the release channel 13 may be arranged in a gap between adjacent grating bars of the grating 111. That is, in the embodiment of the present disclosure, a gap, running through the grating layer, may be arranged between adjacent grating bars. Usually, it is required to arrange gaps between all grating bars, and the gaps may serve as the release channel 13 for releasing the sacrificial layer. In a case that the release channel 13 is arranged in the gap between adjacent grating bars of the grating 111, the following advantages can be achieved. Firstly, the area of the release channel for releasing the sacrificial layer can be significantly increased, thereby improving the efficiency of releasing the sacrificial layer. Secondly, the transmittance of the transmission axis of the grating 111 can be effectively improved, thereby enhancing the responsivity of the pixel layer. Thirdly, it is unnecessary to arrange the release channel 13 in the grating layer, ensuring the integrity of the periodic polarization structure of the grating 111, reducing the optical crosstalk between pixels, and thereby improving the extinction ratio of the uncooled infrared polarization detector.

In a preferred embodiment of the present disclosure, an anti-reflection layer 12 is arranged on a surface of the grating 111 facing away from the semiconductor base 1. The material of the anti-reflection layer 12 may be one or any combination of silicon, germanium, zinc sulfide, zinc selenide, titanium, and titanium nitride. With the anti-reflection layer 12, the reflection of the grating 111 in the light transmission region may be reduced, and the transmittance of the transmission axis of the grating 111 can be improved, thereby improving the thermal response of the detector. The principle and related content of the anti-reflection layer 12 may refer to the conventional technology, and are not repeated herein.

According to the uncooled infrared polarization detection pixel structure in the embodiment of the present disclosure, the first supporting pillar 14 and the second supporting pillar 16 are arranged, so that the area of the bridge piers can be significantly reduced, effectively improving the filling factor of the pixel layer and the grating layer. In addition, the flatness of the grating layer can be improved, ensuring the integrity of the periodic polarization structure of the grating 111. The release channel 13 is arranged, effectively increasing the speed of releasing the sacrificial layer. Furthermore, the release channel 13 is arranged in a gap between adjacent grating bars, the following advantages can be achieved. Firstly, the area of the release channel for releasing the sacrificial layer can be significantly increased, thereby improving the efficiency of releasing the sacrificial layer. Secondly, the transmittance of the transmission axis of the grating 111 can be effectively improved, thereby enhancing the responsivity of the pixel layer. Thirdly, it is unnecessary to arrange the release channel 13 in the grating layer, ensuring the integrity of the periodic polarization structure of the grating 111, reducing the optical crosstalk between pixels, and thereby improving the extinction ratio of the uncooled infrared polarization detector. The anti-reflection layer 12 is arranged, so that the transmittance of the transmission axis of the grating 111 can be improved, thereby improving the thermal response of the detector.

The structure of the uncooled infrared polarization detection pixel structure according to the present disclosure is to be described in detail in the following embodiments of the present disclosure.

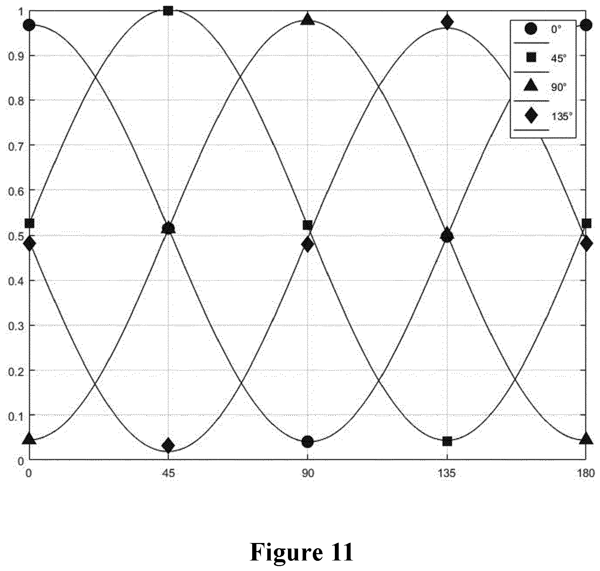

Referring to Figures 10 and 11, Figure 10 is a schematic diagram showing a relationship between responses of pixels in a pixel group of an uncooled infrared detection pixel structure according to the conventional technology and polarization angles of an incident light, and Figure 11 is a schematic diagram showing a relationship between responses of pixels in a pixel group of an uncooled infrared polarization detection pixel structure according to the present disclosure and polarization angles of an incident light.

Different from the above embodiments of the present disclosure, in an embodiment of the present disclosure, a structure of a pixel group in the uncooled infrared polarization detection pixel structure is further defined based on the above embodiments. The rest of the contents has been described in detail in the above embodiments of the present disclosure and is not repeated herein.

In an embodiment of the present disclosure, the uncooled infrared polarization detection pixel structure may include multiple infrared detection pixels. Four infrared detection pixels arranged in a rectangular pattern form a pixel group, and the pixel group is provided with the micro-grating. That is, in a same uncooled infrared polarization detection pixel structure, multiple infrared detection pixels arranged in a rectangular pattern and the micro-grating are usually arranged. In an embodiment of the present disclosure, four adjacent infrared detection pixels arranged in two rows and two columns usually form a pixel group, and each pixel group is provided with a micro-grating. Each of the infrared detection pixels in the pixel group receives light in one polarization direction. Generally, the angles of the gratings 111 in the light transmission regions corresponding to the infrared detection pixels are different.

In the embodiment of the present disclosure, the following three structures of the pixel group are provided, based on each of which the function of the uncooled infrared polarization detection pixel structure may be performed.

In a first structure of the pixel group, the predetermined polarization directions include a 0° polarization direction, a 45° polarization direction, a 90° polarization direction and a 135° polarization direction, the grating layer includes four light transmission regions, the pixel layer and the light transmission regions are both arranged in a regular octagonal shape, and directions of light transmission axes of gratings 111 in the four light transmission regions respectively correspond to the four predetermined polarization directions.

In the first structure, four predetermined polarization directions are arranged, and the infrared detection pixels correspond to the predetermined polarization directions one by one. The pixel layer and the light transmission regions are arranged in a regular octagonal shape. Four light transmission regions are arranged in the grating layer corresponding to the pixel group. The light transmission regions correspond to the four predetermined polarization directions one by one. That is, the gratings 111 in the four light transmission regions correspond to the four predetermined polarization directions one by one. Thus, one pixel group may respond to light in four predetermined polarization directions, and then the imaging process is performed.

Referring to Figures 10 and 11, in which the horizontal axis represents the polarization direction of the incident light and the vertical axis represents the responsivity. Apparently, the inherent non-uniform caused by the structures in the conventional technology is generally greater than 10%, and the responses of the pixels in the uncooled infrared polarization detection pixel structure according to the embodiment of the present disclosure are almost identical.

In a second structure of the pixel group, the predetermined polarization directions include a 0° polarization direction, a 60° polarization direction and a 120° polarization direction, the grating layer includes four light transmission regions, the pixel layer and the light transmission regions are both arranged in a regular hexagonal shape, and each of the three predetermined polarization directions corresponds to at least one of directions of light transmission axes of gratings 111 in the light transmission regions. That is, directions of light transmission axes of gratings in two of the four light transmission regions correspond to one of the predetermined polarization directions, and directions of light transmission axes of gratings in the other two of the four light transmission regions respectively correspond to the other two of the predetermined polarization directions.

In the second structure, four infrared detection pixels form a pixel group, three predetermined polarization directions are arranged, and the pixel group corresponds to four light transmission regions. The light transmission regions and the pixel layer are in a regular hexagonal shape. Each of the three predetermined polarization directions corresponds to at least one of directions of light transmission axes of gratings 111 in the light transmission regions. That is, two of the three predetermined polarization directions correspond to one light transmission region, and the other one of the three predetermined polarization directions corresponds to two light transmission regions. In the second structure, gratings 111 in two light transmission regions are arranged with a same angle, corresponding to a same predetermined polarization direction. Thus, one pixel group may respond to light in three predetermined polarization directions, and then the imaging process is performed.

In a third structure of the pixel group, the predetermined polarization directions include a 0° polarization direction, a 60° polarization direction and a 120° polarization direction, the grating layer includes three light transmission regions, the pixel layer and the light transmission regions are both arranged in a regular hexagonal shape, and directions of light transmission axes of gratings in the three light transmission regions respectively correspond to the three predetermined polarization directions.

Compared to the above structure, in the third structure, three predetermined polarization directions are arranged, one pixel group corresponds to three light transmission regions, and three infrared detection pixels correspond to the three light transmission regions one by one. One infrared detection pixel is not provided with the micro-grating, and external incident light may directly illuminate the infrared detection pixel. The three light transmission regions correspond to the three predetermined polarization directions one by one. Both the pixel layer and the light transmission regions are in a regular hexagonal shape. The three light transmission regions correspond to the three predetermined polarization directions one by one. That is, the gratings 111 in the three light transmission regions correspond to the three predetermined polarization directions one by one. One infrared detection pixel in the pixel group is not provided with the micro structure, and directly receives the incident light. Thus, one pixel group may respond to light in three predetermined polarization directions, and one infrared detection pixel responds to the incident light, and then the imaging process is performed.

Specifically, in an embodiment of the present disclosure, a shading region 112 is arranged between adjacent light transmission regions to block light from irradiating the infrared detection pixels. That is, in a case that a plurality of light transmission regions are arranged in the grating layer, a shading region 112 may be arranged between adjacent light transmission regions to block the propagation of the incident light. Specifically, a metal sheet may be arranged in the shading region 112 to block the light. With the metal sheet, excess incident light may be blocked, avoiding the absorption of incident light that has not been modulated by the grating 111 by the pixel layer, and effectively improving the extinction ratio of the uncooled infrared polarization detection pixel structure.

In the uncooled infrared polarization detection pixel structure according to the embodiment of the present disclosure, the light transmission region of the grating layer is arranged in a regular polygon shape corresponding to the polarization direction, ensuring that the gratings 111 corresponding to different polarization directions in the light transmission region have a same morphology except for different polarization directions, and thereby ensuring that the grating layer has a same transmissivity for incident light with a plurality of predetermined polarization directions. The pixel layer is arranged in a regular polygon shape corresponding to the light transparent region. In addition, the absorption unit 8 is arranged on the surface of the pixel layer, removing the influence of the polarization selective absorption caused by the electrode 71 in the pixel layer, making the infrared detection pixel to be insensitive to light absorption polarization, thereby ensuring consistent response of the pixel layer to light with different polarization directions and avoiding the problem of non-uniform response. Moreover, the grating layer is arranged above the pixel layer by the second bridge pier to separate the grating 111 from the pixels, avoiding a significant increase in the thermal capacity of the pixel layer by the grating layer. Thus, it ensures the response speed of the pixel layer, and ensures that the grating layer has a flat surface and a complete cycle, thereby ensuring uniform light transmission in the light transmission region.

An uncooled infrared polarization detection chip is further provided according to the present disclosure. The uncooled infrared polarization detection chip is provided with the uncooled infrared polarization detection pixel structure according to any of the above embodiments of the present disclosure. For detailed content of the uncooled infrared polarization detection pixel structure, reference may be made to the above embodiments of the present disclosure. For the other structures of the uncooled infrared polarization detection chip, reference may be made to the conventional technology, which is not repeated herein. The semiconductor base 1 may form a readout circuit in the uncooled infrared polarization detection chip to read the signal generated by the uncooled infrared polarization detection pixel structure in the uncooled infrared polarization detection chip.

In the uncooled infrared polarization detection chip according to the embodiment of the present disclosure, the light transmission region of the grating layer is arranged in a regular polygon shape corresponding to the polarization direction, ensuring that the gratings 111 corresponding to different polarization directions in the light transmission region have a same morphology except for different polarization directions, and thereby ensuring that the grating layer has a same transmissivity for incident light with a plurality of predetermined polarization directions. The pixel layer is arranged in a regular polygon shape corresponding to the light transparent region. In addition, the absorption unit 8 is arranged on the surface of the pixel layer, removing the influence of the polarization selective absorption caused by the electrode 71 in the pixel layer, making the infrared detection pixel to be insensitive to light absorption polarization, thereby ensuring consistent response of the pixel layer to light with different polarization directions and avoiding the problem of non-uniform response. Moreover, the grating layer is arranged above the pixel layer by the second bridge pier to separate the grating 111 from the pixels, avoiding a significant increase in the thermal capacity of the pixel layer by the grating layer. Thus, it ensures the response speed of the pixel layer, and ensures that the grating layer has a flat surface and a complete cycle, thereby ensuring uniform light transmission in the light transmission region.

An uncooled infrared polarization detector is further provided according to the present disclosure. The uncooled infrared polarization detector is provided with the uncooled infrared polarization detection chip according to the above embodiment of the present disclosure, and is specifically provided with the uncooled infrared polarization detection pixel structure according to the above embodiment of the present disclosure. For detailed content of the uncooled infrared polarization detection pixel structure, reference may be made to the above embodiment of the present disclosure. For the other structures of the uncooled infrared polarization detector, reference may be made to the conventional technology, which is not repeated herein.

In the uncooled infrared polarization detector according to the embodiment of the present disclosure, the light transmission region of the grating layer is arranged in a regular polygon shape corresponding to the polarization direction, ensuring that the gratings 111 corresponding to different polarization directions in the light transmission region have a same morphology except for different polarization directions, and thereby ensuring that the grating layer has a same transmissivity for incident light with a plurality of predetermined polarization directions. The pixel layer is arranged in a regular polygon shape corresponding to the light transparent region. In addition, the absorption unit 8 is arranged on the surface of the pixel layer, removing the influence of the polarization selective absorption caused by the electrode 71 in the pixel layer, making the infrared detection pixel to be insensitive to light absorption polarization, thereby ensuring consistent response of the pixel layer to light with different polarization directions and avoiding the problem of non-uniform response. Moreover, the grating layer is arranged above the pixel layer by the second bridge pier to separate the grating 111 from the pixels, avoiding a significant increase in the thermal capacity of the pixel layer by the grating layer. Thus, it ensures the response speed of the pixel layer, and ensures that the grating layer has a flat surface and a complete cycle, thereby ensuring uniform light transmission in the light transmission region.

The embodiments in this specification are described in a progressive manner, each of which emphasizes the differences from the others. The same or similar parts among the embodiments may be referred to each other.

Finally, it should be further noted that the relationship terms herein such as "first", "second" and the like are only used to distinguish one entity or operation from another, rather than necessitate or imply that any such actual relationship or order exists between these entities or operations. Moreover, the terms "comprise", "include", or any other variants thereof are intended to encompass a non-exclusive inclusion, such that the process, method, article, or device including a series of elements includes not only those elements but also those elements that are not explicitly listed, or the elements that are inherent to such process, method, article, or device. Unless explicitly limited, the statement "including a ..." does not exclude the case that other similar elements may exist in the process, the method, the article or the device other than enumerated elements.

The uncooled infrared polarization detection pixel structure and the uncooled infrared polarization detector according to the present disclosure are described above in detail. In this specification, examples are used to explain the principles and implementation manners of the present disclosure. The above embodiments are only used to help understand the methods and core ideas of the present disclosure. It should be noted that although those skilled in the art may make improvements and modifications on the present disclosure without departing from the spirit of the present disclosure, the improvements and modifications should fall within the scope of the claims of the present disclosure.

**Claims**

1.  An uncooled infrared polarization detection pixel structure, comprising a semiconductor base, an infrared detection pixel, and a micro-grating, wherein

    the infrared detection pixel comprises a first bridge pier and a pixel layer, the pixel layer is arranged on a side of the semiconductor base by the first bridge pier, an electrode is arranged on a surface of the pixel layer facing away from the semiconductor base, and the electrode is electrically connected to the semiconductor base through a connection line and the first bridge pier;
    the micro-grating comprises a second bridge pier and a grating layer, the grating layer is arranged on a side of the infrared detection pixel facing away from the semiconductor base by the second bridge pier, the grating layer comprises a light transmission region, a grating is arranged along a predetermined polarization direction in the light transmission region, the light transmission region is arranged in a regular polygon shape having edges of 2n times of the number of the predetermined polarization directions where n is a positive integer, and a direction of a light transmission axis of the grating is parallel to a predetermined edge of the light transmission region; and
    the pixel layer is arranged in a regular polygon shape corresponding to the light transmission region, an absorption unit is arranged on the surface of the side of the pixel layer facing away from the semiconductor base, and the absorption unit causes the infrared detection pixel to be insensitive to light absorption polarization.

2.  The uncooled infrared polarization detection pixel structure according to claim 1, wherein the first bridge pier overlaps with the second bridge pier.

3.  The uncooled infrared polarization detection pixel structure according to claim 2, wherein the first bridge pier is electrically insulated from the second bridge pier.

4.  The uncooled infrared polarization detection pixel structure according to claim 2, wherein the first bridge pier is a first supporting pillar, and/or the second bridge pier is a second supporting pillar.

5.  The uncooled infrared polarization detection pixel structure according to claim 4, wherein the first supporting pillar is a metal pillar prepared by a tungsten filling process, and the second supporting pillar is a metal pillar prepared by the tungsten filling process.

6.  The uncooled infrared polarization detection pixel structure according to claim 2, wherein the first bridge pier has a hollow structure, and/or the second bridge pier has a hollow structure.

7. The uncooled infrared polarization detection pixel structure according to claim 1, wherein the grating layer is arranged with a release channel running through the grating layer.

8. The uncooled infrared polarization detection pixel structure according to claim 7, wherein the release channel is arranged in a gap between adjacent grating bars of the grating.

9. The uncooled infrared polarization detection pixel structure according to claim 1, wherein an anti-reflection layer is arranged on a surface of the grating facing away from the semiconductor base.

10. The uncooled infrared polarization detection pixel structure according to any one of claims 1 to 9, wherein the absorption unit and the electrode are arranged to be symmetrically distributed with respect to a center of the pixel layer, any of the predetermined polarization directions corresponds to the absorption unit or the electrode, and the absorption unit and the electrode absorb the same amount of light in the any of the predetermined polarization direction.

11. The uncooled infrared polarization detection pixel structure according to claim 10, wherein a material and a size of the absorption unit are same as a material and a size of the electrode.

12. The uncooled infrared polarization detection pixel structure according to any one of claims 1 to 9, wherein the absorption unit is insensitive to the light absorption polarization, and a light absorption performance of the absorption unit is stronger than a light absorption performance of the electrode.

13. The uncooled infrared polarization detection pixel structure according to any one of claims 1 to 9, wherein polarization selective absorption of light by the absorption unit cancels out the polarization selective absorption of light by the electrode.

14. The uncooled infrared polarization detection pixel structure according to claim 1, comprising a plurality of infrared detection pixels, wherein four infrared detection pixels arranged in a rectangular pattern form a pixel group, and the pixel group is arranged with the micro-grating.

15. The uncooled infrared polarization detection pixel structure according to claim 14, wherein the predetermined polarization directions comprise a 0° polarization direction, a 45° polarization direction, a 90° polarization direction and a 135° polarization direction, the grating layer comprises four light transmission regions, the pixel layer and the light transmission regions are both arranged in a regular octagonal shape, and directions of light transmission axes of gratings in the four light transmission regions respectively correspond to the four predetermined polarization directions.

16. The uncooled infrared polarization detection pixel structure according to claim 14, wherein the predetermined polarization directions comprise a 0° polarization direction, a 60° polarization direction and a 120° polarization direction, the grating layer comprises four light transmission regions, the pixel layer and the light transmission regions are both arranged in a regular hexagonal shape, directions of light transmission axes of gratings in two of the four light transmission regions correspond to one of the predetermined polarization directions, and directions of light transmission axes of gratings in the other two of the four light transmission regions respectively correspond to the other two of the predetermined polarization directions.

17. The uncooled infrared polarization detection pixel structure according to claim 14, wherein the predetermined polarization directions comprise a 0° polarization direction, a 60° polarization direction and a 120° polarization direction, the grating layer comprises three light transmission regions, the pixel layer and the light transmission regions are both arranged in a regular hexagonal shape, and directions of light transmission axes of gratings in the three light transmission regions respectively correspond to the three predetermined polarization directions.

18. The uncooled infrared polarization detection pixel structure according to any one of claims 15 to 17, wherein a shading region is arranged between adjacent light transmission regions to block light from irradiating the infrared detection pixels.

19. An uncooled infrared polarization detection chip, comprising the uncooled infrared polarization detection pixel structure according to any one of claims 1 to 18.

20. An uncooled infrared polarization detector, comprising the uncooled infrared polarization detection pixel structure according to any one of claims 1 to 18.

**Figure 1**

111

112

**Figure 2**

**Figure 3**

**Figure 4**

112

111

13

10

**Figure 5**

112    111    12

15  16  6    9    8    71    72    10

14    4    5    7

3    1    2    21

**Figure 6**

112

111

13

**Figure 7**

112    13    111    12

10

6    9    8    71    72    7

4    5

3    1    2    21

**Figure 8**

Figure 9

Figure 10

**Figure 11**

## INTERNATIONAL SEARCH REPORT

| International application No. |
| --- |
| **PCT/CN2021/130028** |

| A. CLASSIFICATION OF SUBJECT MATTER |
| --- |
| G01J 5/48(2006.01)i; G01J 5/08(2022.01)i; G01J 5/20(2006.01)i |
| According to International Patent Classification (IPC) or to both national classification and IPC |

| B. FIELDS SEARCHED |
| --- |
| Minimum documentation searched (classification system followed by classification symbols)<br>　　G01J |
| Documentation searched other than minimum documentation to the extent that such documents are included in the fields searched |
| Electronic data base consulted during the international search (name of data base and, where practicable, search terms used)<br>　　CNPAT, CNKI, WPI, EPODOC: 烟台睿创微纳技术, 非制冷, 偏振, 冷红外, 红外, 探测, 像元, 光栅, 方向, 正多边形, 正八边形, 正六边形, 桥墩, 透光轴, 平行, 不敏感, 电极, 抵消, 中心, 对称, polariz+, uncooled, infrared, focal plane, detect +, microbridge?, detector pixel?, grating?, regular polygon?, octagon?, hexagon?, centrosymmetric, centrally symmetric+, insensitive |

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | CN 109309140 A (NORTH GUANGWEI TECHNOLOGY INC.) 05 February 2019 (2019-02-05)<br>　　description, paragraphs [0024]-[0037], and figures 5-7 | 1-9, 12, 14-20 |
| Y | CN 111896122 A (YANTAI RAYTRON TECHNOLOGY CO., LTD.) 06 November 2020 (2020-11-06)<br>　　description, paragraphs [0046]-[0085], and figures 1 and 19 | 1-9, 12, 14-20 |
| A | CN 110095185 A (UNIVERSITY OF ELECTRONIC SCIENCE AND TECHNOLOGY OF CHINA) 06 August 2019 (2019-08-06)<br>　　entire document | 1-20 |
| A | CN 111947789 A (YANTAI RAYTRON TECHNOLOGY CO., LTD.) 17 November 2020 (2020-11-17)<br>　　entire document | 1-20 |
| A | CN 113036444 A (NANJING UNIVERSITY OF POSTS AND TELECOMMUNICATIONS) 25 June 2021 (2021-06-25)<br>　　entire document | 1-20 |

| ☑ Further documents are listed in the continuation of Box C. | ☑ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>**16 May 2022** | Date of mailing of the international search report<br>**26 May 2022** |
| --- | --- |
| Name and mailing address of the ISA/CN<br><br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**

<table>
<tr><td colspan="2">International application No.</td></tr>
<tr><td colspan="2">**PCT/CN2021/130028**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | US 2011266441 A1 (FAGAN III, Thomas P. et al.) 03 November 2011 (2011-11-03)<br>entire document | 1-20 |

Form PCT/ISA/210 (second sheet) (January 2015)

**INTERNATIONAL SEARCH REPORT**
Information on patent family members

International application No.

**PCT/CN2021/130028**

| Patent document cited in search report | | | Publication date (day/month/year) | Patent family member(s) | | | Publication date (day/month/year) |
|---|---|---|---|---|---|---|---|
| CN | 109309140 | A | 05 February 2019 | CN | 109309140 | B | 05 January 2021 |
| CN | 111896122 | A | 06 November 2020 | CN | 111896122 | B | 16 November 2021 |
| CN | 110095185 | A | 06 August 2019 | CN | 110095185 | B | 20 November 2020 |
| CN | 111947789 | A | 17 November 2020 | CN | 111947789 | B | 21 December 2021 |
| CN | 113036444 | A | 25 June 2021 | | None | | |
| US | 2011266441 | A1 | 03 November 2011 | WO | 2011139326 | A2 | 10 November 2011 |
| | | | | DE | 112011101490 | T5 | 29 May 2013 |
| | | | | US | 8227755 | B2 | 24 July 2012 |
| | | | | GB | 2494318 | A | 06 March 2013 |
| | | | | GB | 2494318 | B | 23 April 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111276820X